# EUROPÄISCHE PATENTSCHRIFT

(11) **EP 0 945 644 B1**
(45) Veröffentlichungstag und Bekanntmachung des Hinweises auf die Patenterteilung: **10.04.2002**
(21) Anmeldenummer: 98105520.5
(22) Anmeldetag: 26.03.1998
(51) Int. Cl.: F16G 1/28, B29D 29/08

(54) **Zahnriemen und Verfahren zu seiner Herstellung**
Toothed belt and method for making it
Courroie crantée et son procédé de fabrication

(43) Veröffentlichungstag der Anmeldung: 29.09.1999
(73) Patentinhaber: ContiTech Antriebssysteme GmbH, 30165 Hannover (DE)
(72) Erfinder: Schulte, Hermann, 30823 Garbsen (DE); Marwede, Rolf, 30989 Gehrden (DE); Klier, Thomas, 30659 Hannover (DE)
(74) Vertreter: Schneider, Egon

(56) Entgegenhaltungen:
- AT-B- 268 791
- DE-A- 2 058 764
- DE-A- 2 159 084
- DE-C- 19 649 931
- US-A- 3 078 206
- US-A- 5 643 378

## Beschreibung

Die Erfindung betrifft einen Zahnriemen für Antriebszwecke und ein Verfahren zu seiner Herstellung.

Der Zahnriemen weist in seinem Aufbau die im Oberbegriff des Patentanspruchs 1 genannten Merkmale auf. Ein derartiger Zahnriemen ist als bekannt vorauszusetzen, siehe z.B. US-A-3 078 206.

Zahnriemen werden insbesondere nach dem sogenannten Durchdrückverfahren hergestellt, das in Übereinstimmung mit dem Oberbegriff des Anspruchs 6 als bekannt vorauszusetzen ist :
Die künftigen Zahnriemen werden auf einem als Form bezeichneten Stahlzylinder aufgebaut. Hierfür wird zunächst ein Gewebestrumpf auf die Form gezogen. In weiteren Schichten folgen ein Zugstrang, eine Gummiplatte und ein Papiervlies. Das Papiervlies soll bei der sich anschließenden Vulkanisation für die Abfuhr der entstehenden Gase sorgen. Die so "bewickelte" Form wird mit einer Manschette überzogen und in einen Vulkanisierkessel (Autoklav) gegeben, wo der Wickelrohling unter Druck vulkanisiert wird. Dabei verbindet sich das Papiervlies mit dem Rücken des Zahnriemenwickels. Nach der Vulkanisation wird der als Wickel bezeichnete Rohling von der Form und von der Manschette gezogen und auf die endgültige Riemenhöhe abgeschliffen. Zum Schluß erfolgt noch eine Kennzeichnung und danach können die Riemen in unterschiedlichen Breiten abgestochen werden.

In einer abschließenden Endkontrolle werden die Riemen noch einmal auf Fertigungsfehler durchgesehen und vermessen.

Der Nachteil bei der Verwendung eines Papiervlieses besteht darin, daß ein solches Vlies durch Schleifen des Riemenrückens entfernt werden muß, weil eine milchig graue Oberfläche entstanden ist, die häßlich aussieht. Mit dem Abschleifen des Riemenrückens will man nicht nur das hinderlich gewordene Papiervlies entfernen, sondern es wird darüberhinaus eine gewisse Oberflächenstruktur gewünscht, damit Oberflächenungenauigkeiten nicht mehr sichtbar sind. Deshalb soll ein dominierendes Oberflächenmuster angestrebt werden.

Für das Schleifen zur Entfernung des Papiervlieses und zur Anbringung einer Kennzeichnung waren bisher mehrere zusätzliche Arbeitsgänge erforderlich.

Die Druckschrift DE-OS 21 59 084 beschreibt einen Kraftübertragungsriemen aus gießfähigen elastomeren Kunststoffen. Zur Verbesserung der Biege- und damit auch zur Verbesserung der Laufeigenschaften enthält der Riemen darin eingebettete Festigkeitsträger, die von einem haftend mit dem elastomeren Kunststoff - beispielsweise Polyamid - verbundenen Faservlies gebildet sind, das vorzugsweise in Form einer äußeren Hüllschicht am Riemenrücken angeordnet ist.
Ein Antriebsriemen, dessen Zugstrang als Hüllschicht ausgebildet ist und z. B. aus Polyamid besteht, ist auch bereits aus der AT-PS 268 791 bekannt.
Auch bei dem in der DE-AS 20 58 764 beschriebenen Keilriemen besteht eine Rückenabdeckung vorzugsweise aus Polyamidfasern. Bei dieser Faserverstärkung geht es in erster Linie um eine Verbesserung der Kraftübertragung. Zu diesem Zweck ist die Stärke der Abdeckschicht vorzugsweise 1,5 - 2 mm.
Wie sich im folgenden herausstellen wird, geben die genannten, als Hüll- bzw. Abdeckschicht ausgebildeten Zugträger für die vorliegende Erfindung keine Anregung, da sie ausschließlich zur Steigerung der Festigkeit des Riemens eingesetzt sind und nach Dicke und Funktion nicht mit dem des Anmeldungsgegenstands vergleichbar sind.

Die Aufgabe der vorliegenden Erfindung besteht darin, den Aufbau und das Herstellungsverfahren des eingangs genannten Zahnriemens zu vereinfachen.

Wie in den Patentansprüchen dargelegt, wird bei einer ansonsten bekannten Herstellung eines Zahnriemens statt eines Papiervlieses ein Kunststoff-Vlies benutzt, - vorzugsweise ein Polyamid-Vlies - in der Farbe der Gummimischung, das im fertigen Zahnriemen verbleibt. üblicherweise ist die Farbe schwarz. Kunststoff läßt sich auch in kleineren Chargen leicht durchfärben.

Auch das aufgelegte Polyamid-Vlies verbindet sich - ähnlich wie ein Papiervlies - mit dem Rücken des Gummizahnriemens. Es bildet kein störendes Aussehen, da das Polyamid-Vlies nicht sichtbar ist. Ein Schleifvorgang ist deshalb nicht mehr nötig. Schleifabfälle entstehen nicht mehr.

Ein weiterer Vorteil wird darin gesehen, daß eine bei der Vulkanisation aufgebrachte Oberflächenstruktur des Zahnriemenrückens bei der Vulkanisation erhalten bleibt, weil der Schleifvorgang entfällt. Die Oberflächenstruktur wird durch eine entsprechend geformte, aber abziehbare Manschette mit aufgebracht. Diese Struktur gibt ein dominantes Oberflächenmuster.

Außerdem wurde festgestellt, daß bei Verwendung des erfindungsgemäßen Zahnriemens eine Geräuschminderung in Riementrieben vorliegt, bei denen eine Spannrolle auf den Rücken des Riemens wirkt.

Ein weiterer wesentlicher Vorteil wird darin gesehen, daß die den Riemen kennzeichnende Schriftfolie auf das Vlies vor dem Vulkanisieren mit aufgelegt werden kann. Dieser Kunststoff streifen braucht später nicht separat aufgebracht zu werden.

Die Oberflächenstruktur wird durch eine entsprechende Ausbildung der Innenfläche der Druckmanschette aufgebracht. Glatte Manschetten würden Oberflächenfehler bzw. Oberflächenungenauigkeiten sichtbar machen.

Aus den vorstehend genannten Gründen werden bei der Verwendung eines Kunststoff-Vlieses gegenüber der Verwendung von Papiervlies mehrere Arbeitsgänge eingespart.

Es ist bekannt, auf Riemenrücken Abdeckgewebe zur Festigkeitssteigerung aufzubringen. Im Vergleich mit derartigen Vliesen sind Abdeckgewebe wesentlich dicker. Ein Abdeckgewebe ist beispielsweise 5/10 mm dick, während das verwendete Vlies 5/100 mm ist. Ein Vlies ist wesentlich dünner und außerdem aus ungewebter oder ungewirkter Textillage hergestellt. Das verwendete Vlies ist so fein, daß sich kein entscheidender Beitrag zur Längs- und Quersteifigkeit ergibt. Es ist gut ausformbar für eine Rückenprägung.

Im folgenden wird der Aufbau des erfindungsgemäßen Zahnriemens und das Verfahren zu seiner Herstellung anhand der beigefügten Zeichnungen erläutert.
Die Fig. 1 zeigt einen Schnitt durch den Rohlingsaufbau eines herzustellenden Zahnriemenwickels;
die Figuren 2 und 3 zeigen als ausgebrochene Darstellung verschieden strukturierte Innenoberflächen der abziehbaren Druckmanschette;
die Fig. 4 zeigt ausschnittsweise, in perspektivischer Ansicht, ein Segment des fertigen Zahnriemens.

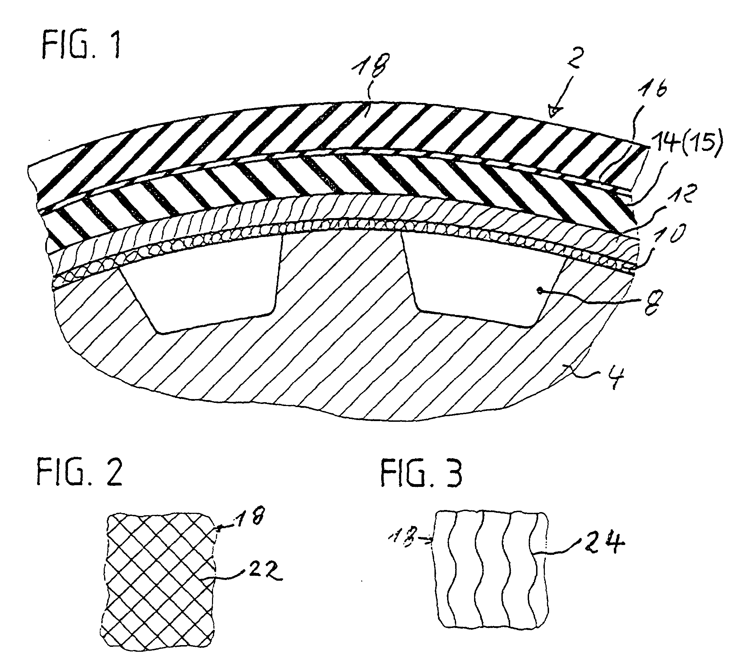

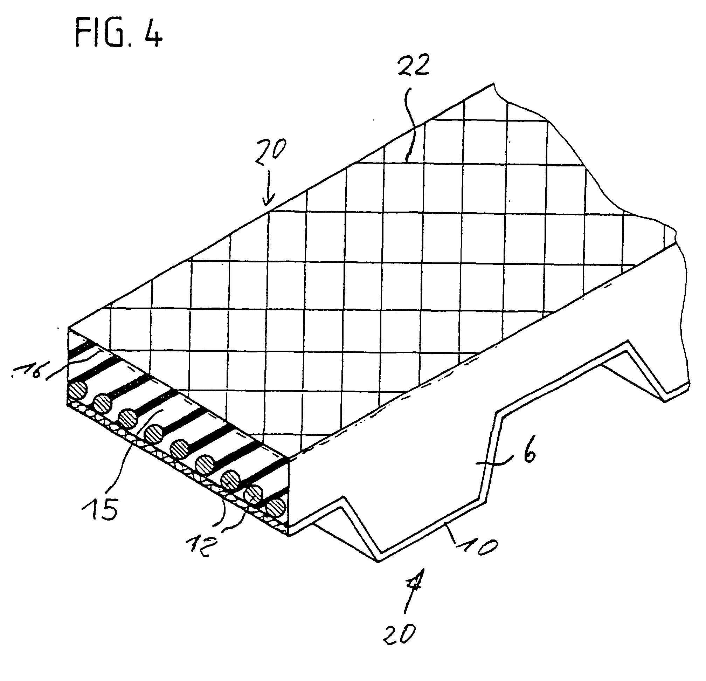

Der in Fig. 1 dargestellte Zahnriemenrohlingswickel 2 wird auf eine zylindrische Walze 4 mit zur Ausformung der Zähne 6 (Fig. 4) vorgesehenen Nuten 8 aufgebaut. Dabei werden entweder die Nuten 8 mit Gummimaterial separat ausgefüllt oder es wird das sogenannte Durchdrückverfahren benutzt. Bei dem Durchdrückverfahren wird zuerst ein Gewebestrumpf 10 aus Polyamidgewebe über den Zylinder 4 gelegt. Dieser Gewebestrumpf 10 dient als Abdeckgewebe für die später ausgeformten Zähne 6. Darauf aufbauend wird ein Zugstrang 12 aus Glascord oder Aramid wendelförmig aufgewickelt. Auf diese Zugträgerlage 12 wird eine aus einer Gummimischung bestehende Gummiplatte 14 auf Stoß aufgelegt. Auf dem Rücken dieses Rohlings 2, wo bisher ein Papiervlies aufgebracht worden ist, wird ein Kunststoff-Vlies 16 aufgebracht. Das Kunststoff-Vlies 16 ist durchgefärbt und weist die Farbe der verwendeten Gummimischung auf. In der bevorzugten Ausführungsform besteht das Kunststoff-Vlies 16 aus Polyamid. Der so aufgebaute Rohlingswickel 2 wird von einer abziehbaren Druckmanschette 18 abgedeckt, die druckbeaufschlagbar ist. Das gesamte Paket wird in einen Autoklav gebracht und unter Druck und Wärme ausvulkanisiert. Dabei fließt der Kautschuk durch den Festigkeitsträger 12 in die mit dem abdeckenden Gewebe versehenen Zahnformen 8; bzw. beim Einlegeverfahren verbinden sich die Schichten miteinander. Durch den Vulkanisationsvorgang entsteht aus der Gummiplatte 14 (Fig. 1) ein Gummikörper 15 (Fig. 4). Das Kunststoff-Vlies 16 verbindet sich (so wie bisher das Papiervlies) mit dem Rücken des Zahnriemenwickels 2. Anschließend ist aber kein Schleifvorgang mehr erforderlich.

Durch eine vorgegebene Struktur der Innenoberfläche der abziehbaren Druckmanschette 18 kann eine entsprechend geformte Oberfläche des Zahnriemens 20 erzeugt werden. Die Fig. 2 zeigt eine rasterförmige Oberfläche 22; Fig. 3 zeigt eine Oberflächenstruktur mit durchlaufenden, parallelen Wellenlinien 24.

Eine den Riemen 20 (Fig. 4) kennzeichnende Schriftfolie kann bereits bei der Herstellung des Rohlings 2 auf dem Vlies gleichzeitig mit aufgebracht werden.

### Bezugszeichenliste

- 2: Zahnriemenrohlingswickel
- 4: zylindrische Walze, Zylinder
- 6: Zähne
- 8: Nuten, Zahnformen
- 10: Abdeckgewebestrumpf
- 12: Zugstrang, Zugträgerlage, Festigkeitsträger
- 14: Gummi platte
- 15: Gummikörper
- 16: Kunststoff-Vlies
- 18: abziehbare Druckmanschette
- 20: Zahnriemen
- 22: rasterförmige <gitterförmige) Oberfläche
- 24: parallel gewellte Oberflächenstruktur

## Patentansprüche

1. Zahnriemen (20) aus elastomerem Werkstoff mit folgendem Aufbau:
- ein die Zähne (6) abdeckendes Gewebe (10),
- ein Zugstrang (12),
- ein Gummikörper (15),
**dadurch gekennzeichnet,**
**daß** zur Gasabfuhr auf dem Riemenrücken ein einvulkanisiertes, im wesentlichen 5/100 mm starkes Kunststoff-Vlies (16) in der Farbe der Gummimischung angebracht ist.

2. Zahnriemen nach Anspruch 1,
**dadurch gekennzeichnet,**
**daß** das Kunststoff-Vlies (16) schwarz ist.

3. Zahnriemen nach Anspruch 1 oder 2,
**dadurch gekennzeichnet,**
**daß** das Kunststoff-Vlies (16) aus Polyamid besteht.

4. Zahnriemen nach einem der Ansprüche 1 - 3,
**gekennzeichnet durch**
eine strukturierte Rückenoberfläche.

5. Zahnriemen nach Anspruch 4,
**dadurch gekennzeichnet,**
**daß** die strukturierte Rückenoberfläche gitterförmig (22) oder wellenförmig (24) ist.

6. Verfahren zur Herstellung eines Zahnriemens, bestehend aus folgenden Verfahrensschritten:
- Aufbringen eines Abdeckgewebestrumpfes (10) auf einen Formzylinder (4),
- Aufspulen eines Zugträgers (12) auf den Abdeckgewebestrumpf (10),
- Auflegen einer Gummiplatte (14) auf den Zugträger (12),
- Auflegen eines Vlieses (16) zur Gasabfuhr,
- Auflegen bzw. Einbringen in eine druckbeaufschlagbare, abziehbare Druckmanschette (18) aus Gummi,
- Einbringen des gesamten, aus den genannten Lagen bestehenden Pakets, das einen Zahnriemenrohlingswickel (2) darstellt, in einen Autoklav und
- Ausvulkanisieren unter Druck,
**dadurch gekennzeichnet,**
**daß** als Vlies auf dem Riemenrücken ein im wesentlichen 5/100 mm starkes Kunststoffvlies (16) in der Farbe der Gummimischung verwendet wird.

7. Verfahren nach Anspruch 6,
**dadurch gekennzeichnet,**
**daß** das verwendete Vlies (16) ein schwarzes Kunststoff-Vlies ist.

8. Verfahren nach Anspruch 7 oder 8,
**dadurch gekennzeichnet,**
**daß** das verwendete Kunststoff-Vlies (16) aus Polyamid besteht.

9. Verfahren nach einem der Ansprüche 6 - 8,
**dadurch gekennzeichnet,**
**daß** die aufgelegte, druckbeaufschlagbare Gummimanschette (18) eine strukturierte Innenoberfläche (22, 24) aufweist.

10. Verfahren nach Anspruch 9,
**dadurch gekennzeichnet,**
**daß** die strukturierte Innenoberfläche der verwendeten Gummimanschette (18) gitterförmig (22) oder wellenförmig (24) ist.

11. Verfahren nach einem der Ansprüche 6 - 10,
**gekennzeichnet durch**
Auflegen einer Kennzeichnungsfolie auf das Kunststoff-Vlies (16) vor dem Einbringen in die abziehbare Druckmanschette (18).

## Claims

1. Toothed belt (20), formed from elastomeric material and having the following construction:
- a fabric (10) which covers the teeth (6),
- a tensile strand (12), and
- a rubber body (15),
**characterised in that** a partially vulcanised plastics material web (16), having a thickness of substantially 5/100 mm and being in the colour of the rubber mixture, is attached to the rear of the belt for the removal of gas.

2. Toothed belt according to claim 1, **characterised in that** the plastics material web (16) is black.

3. Toothed belt according to claim 1 or 2, **characterised in that** the plastics material web (16) is formed from polyamide.

4. Toothed belt according to one of claims 1 - 3, **characterised by** a structured rear surface.

5. Toothed belt according to claim 4, **characterised in that** the structured rear surface is lattice-like (22) or undulatory (24).

6. Method of producing a toothed belt, comprising the following method steps:
- applying a cover fabric stocking (10) to a shaping cylinder (4),
- winding a tensile support (12) onto the cover fabric stocking (10),
- depositing a rubber plate (14) upon the tensile support (12),
- depositing a web (16) for the removal of gas,
- depositing or respectively introducing such web into a removable pressure sleeve (18), which is formed from rubber and can be acted upon by pressure,
- introducing the entire assembly, which comprises the above-mentioned layers and represents a toothed belt blank coil (2), into an autoclave, and
- fully vulcanising under pressure,
**characterised in that** a plastics material web (16), which has a thickness of substantially 5/100 mm and is in the colour of the rubber mixture, is used as the web on the rear of the belt.

7. Method according to claim 6, **characterised in that** the web (16) used is a black plastics material web.

8. Method according to claim 7 or 8, **characterised in that** the plastics material web (16) used is formed from polyamide.

9. Method according to one of claims 6 - 8, **characterised in that** the deposited rubber sleeve (18), which can be acted upon by pressure, has a structured internal surface (22, 24).

10. Method according to claim 9, **characterised in that** the structured internal surface of the rubber sleeve (18) used is lattice-like (22) or undulatory (24).

11. Method according to one of claims 6 - 10, **characterised by** depositing an identification film upon the plastics material web (16) prior to its being introduced into the removable pressure sleeve.

## Revendications

1. Courroie crantée (20) en matériau élastomère ayant la structure suivante :
- un tissu (10) recouvrant les crans (6),
- une corde de traction (12),
- un corps de caoutchouc (15),
**caractérisée en ce qu'**un voile de matière plastique (16) vulcanisé, essentiellement d'une épaisseur de 5/100 mm de la couleur du mélange de caoutchouc est déposé sur le dos de la courroie pour l'évacuation des gaz.

2. Courroie crantée selon la revendication 1, **caractérisée en ce que** le voile de matière pastique (16) est noir.

3. Courroie crantée selon l'une des revendications 1 ou 2, **caractérisée en ce que** le voile de matière plastique (16) est réalisé en polyamide.

4. Courroie crantée selon l'une des revendications 1 à 3, **caractérisée par** une surface de dos structurée.

5. Courroie crantée selon la revendication 4, **caractérisée en ce que** la surface de dos structurée présente la forme d'un quadrillage (22) ou d'ondulations (24).

6. Procédé de fabrication d'une courroie crantée comprenant les étapes suivantes :
- dépôt d'un manchon de tissu de recouvrement (10) sur un cylindre gravé (4),
- enroulement d'un élément de traction (12) sur le manchon de tissu de recouvrement (10),
- dépôt d'une plaque de caoutchouc (14) sur l'élément de traction (12),
- dépôt d'un voile (16) pour l'évacuation des gaz,
- dépôt ou installation dans une manchette de pression (18) en caoutchouc pouvant être pressurisée pelable,
- installation de l'ensemble complet composé des couches précitées, qui forme une bobine d'ébauche de courroie crantée (2), dans un autoclave, et
- vulcanisation sous pression,
**caractérisé en ce qu'**un voile de matière plastique (16) essentiellement d'une épaisseur de 5/100 mm de la couleur du mélange de caoutchouc est utilisé comme voile sur le dos de la courroie.

7. Procédé selon la revendication 6, **caractérisé en ce que** le voile (16) utilisé est un voile de matière plastique noir.

8. Procédé selon l'une des revendications 6 ou 7, **caractérisé en ce que** le voile de matière plastique (16) utilisé est réalisé en polyamide.

9. Procédé selon l'une des revendications 6 à 8, **caractérisé en ce que** la manchette de caoutchouc (18) pouvant être pressurisée qui est appliquée présente une surface intérieure (22, 24) structurée.

10. Procédé selon la revendication 9, **caractérisé en ce que** la surface intérieure structurée de la manchette de caoutchouc (18) utilisée présente la forme d'un quadrillage (22) ou d'ondulations (24).

11. Procédé selon l'une des revendications 6 à 10, **caractérisé par** le dépôt d'une pellicule d'identification sur le voile de matière plastique (16) avant l'installation dans la manchette de pression pelable (18).
